# EUROPÄISCHE PATENTSCHRIFT

(11) **EP 3 120 400 B1**
(45) Veröffentlichungstag und Bekanntmachung des Hinweises auf die Patenterteilung: **12.06.2019**
(21) Anmeldenummer: 15709487.1
(22) Anmeldetag: 12.03.2015
(51) Int. Cl.: H01M 4/131, H01M 4/1391, H01M 4/36, H01M 4/485, H01M 4/505, H01M 4/525, H01M 10/052, H01M 4/02

(54) **ELEKTRODE FÜR EINE LITHIUM-ZELLE**
ELECTRODE FOR A LITHIUM CELL
ÉLECTRODE POUR UNE PILE AU LITHIUM

(30) Priorität: 21.03.2014 DE 102014205356
(43) Veröffentlichungstag der Anmeldung: 25.01.2017
(73) Patentinhaber: Robert Bosch GmbH, 70442 Stuttgart (DE)
(72) Erfinder: KERKAMM, Ingo, 70565 Stuttgart-Rohr (DE); ROLFF, Malte, 23617 Stockelsdorf (DE); SCHUMANN, Bernd, 71277 Rutesheim (DE); ECKL, Thomas, 71229 Leonberg (DE); MARUSCZYK, Anika, 45899 Gelsenkirchen (DE)
(86) Internationale Anmeldenummer: PCT/EP2015/055214
(87) Internationale Veröffentlichungsnummer: WO 2015/140049

(56) Entgegenhaltungen:
- JP-A- 2000 231 919
- US-A1- 2011 076 556
- OHTA ET AL: "LiNbO3-coated LiCoO2 as cathode material for all solid-state lithium secondary batteries", ELECTROCHEMISTRY COMMUNICATIONS, ELSEVIER, AMSTERDAM, NL, Bd. 9, Nr. 7, 15. Juni 2007 (2007-06-15), Seiten 1486-1490, XP022118571, ISSN: 1388-2481, DOI: 10.1016/J.ELECOM.2007.02.008

## Beschreibung

Die vorliegende Erfindung betrifft ein Elektrode und einen elektrochemischen Energiespeicher aufweisend eine derartige Elektrode sowie ein Verfahren zum Herstellen einer derartigen Elektrode.

### Stand der Technik

Momentan wird die Elektrifizierung des Automobils stark vorantrieben, wobei insbesondere die Lithium-Ionen-Batterie im Fokus der Forschung steht. Um für den Verbraucher interessant zu sein, müssen Batterien für Anwendungen in Elektroautos eine hohe Lebensdauer (>10 Jahre) gewährleisten. Das bedeutet, dass die Zellspannung und die bei einer Entladung frei werdende Energie auch nach 10 Jahren noch ca. ≥ 90 % der Ausgangswerte betragen sollten. Insbesondere bei sogenannten Hochenergie-Materialien wie das Hochenergie-NCM (LiMO₂ : Li₂MnO₃ mit M = Nickel (Ni), Cobald (Co), Mangan (Mn)) sind diese Anforderungen bislang noch nicht erfüllt. Das HE-NCM liefert bislang zwar hohe Start-Spannungen, zeigt jedoch im Laufe der Lebenszeit einen deutlichen Verlust der Spannungslage (Voltage Fade) einhergehend mit einem Abfall der Kapazität (Capacity Fade). Deshalb ist das grundsätzlich hochinteressante Material HE-NCM bislang nicht für kommerzielle Nutzung geeignet.

Für eine Reduzierung des Kapazitätsabfalls ist der Hauptansatz in der Literatur ein Beschichtung des Materials mit z.B. Al₂O₃, LiAlOx, ZrO₂, TiO₂, AlPO₄, LiPON etc. (vgl. I. Bloom et al., J. Power Sources 2013), wobei zwei grundlegende Ansätze für Material-Beschichtungen bekannt sind: Zum einen die Beschichtung des Ausgangspulvers, also der Primär- und Sekundärpartikel, zum anderen die Beschichtung einer fertig laminierten Elektrode, in dem das Kathodenmaterial bereits verarbeitet ist. Der Kapazitätsabfall wird zwar reduziert, er bleibt jedoch auch bei diesen Ansätzen weiterhin kritisch.

Zur Reduzierung des Spannungsabfalls ist es basierend auf den bisherigen Erkenntnissen aus der Literatur grundsätzlich denkbar, redoxinaktive Elemente wie Mg(II) und Sn(IV) zu dotieren, die keine Änderung der Oxidationsstufe und keine unerwünschte Wanderung im Material während der Zyklisierung zeigen und somit die Struktur des Materials stabilisieren. Dotierungen von HE-NCM mit Mg und Sn sind literaturbekannt. Die Einführung von redoxinaktiven Elementen verringert zwar den Abfall der Spannung und der Kapazität im Laufe der Zeit, jedoch ist dies mit einem unerwünschten Verlust von Anfangs-Kapazität und - Spannung der Zelle verbunden.

Der relevante Stand der Technik ist zum Beispiel in Ohta et al., Electrochemistry Communications 9 (2007) Seiten 1486-1490 dargestellt.

Die Erfindung dient daher dazu, die Lebensdauer einer Lithium-Ionen-Zelle oder - Batterie, insbesondere einer HE-NCM Lithium-Ionen-Batterie zu erhöhen. Offenbarung der Erfindung

Gegenstand der Erfindung, entsprechend Anspruch 1, ist eine Elektrode, insbesondere Kathode, für einen elektrochemischen Energiespeicher, insbesondere für eine Lithium-Zelle, mit Partikeln aufweisend ein erstes lithiierbares Aktivmaterial, welches auf einem Übergangsmetalloxid basiert, wobei
- die Partikel oder
- ein die Partikel aufweisender Grundkörper
zumindest teilweise mit einer Funktionsschicht versehen sind/ist, welche Lithiumionen leitend ist und mindestens ein redoxaktives Element aufweist.

Gegenstand der vorliegenden Erfindung ist ferner ein Energiespeicher, insbesondere für eine Lithium-Zelle, aufweisend eine derartige Elektrode.

Unter einem elektrochemischen Energiespeicher kann im Sinne der vorliegenden Erfindung insbesondere jegliche Batterie verstanden werden. Insbesondere kann ein Energiespeicher neben einer Primär-Batterie vor allem eine Sekundär-Batterie, also einen wieder aufladbaren Akkumulator, umfassen. Eine Batterie kann dabei ein galvanisches Element oder eine Mehrzahl an untereinander verbundenen galvanischen Elementen umfassen oder sein. Beispielsweise kann ein Energiespeicher einen lithiumbasierten Energiespeicher wie etwa eine Lithium-Ionen-Batterie umfassen. Dabei kann unter einem lithiumbasierten Energiespeicher wie etwa einer Lithium-Ionen-Batterie insbesondere ein derartiger Energiespeicher verstanden werden, dessen elektrochemische Prozesse während eines Lade- beziehungsweise Entladevorgangs zumindest teilweise auf Lithiumionen basieren. Dabei kann ein derartiger Energiespeicher Anwendung finden als Batterie für Laptop-, PDA-, Handy- und andere Consumeranwendungen, Elektrowerkzeuge, Gartenwerkzeuge sowie Hybrid-, Plug-in-Hybridfahrzeuge und Elektrofahrzeuge.

Unter einer Lithium-Zelle kann insbesondere eine elektrochemische Zelle verstanden werden, deren Anode (negative Elektrode) Lithium umfasst. Beispielsweise kann es sich dabei um eine Lithium-Ionen-Zelle, eine Zelle deren Anode (negative Elektrode) ein Interkalationsmaterial, zum Beispiel Graphit und/oder Silicium, umfasst, in welches Lithium reversibel ein- und auslagerbar ist, oder um eine Lithium-Metall-Zelle, eine Zelle mit einer Anode (negativen Elektrode) aus metallischem Lithium oder einer Lithiumlegierung, handeln.

Unter einem Partikel können im Sinne der vorliegenden Erfindung bspw. Primär- und Sekundärpartikel des Ausgangspulvers verstanden werden. Primärpartikel sind als die kleinsten Ausgangs-Partikeleinheiten des Pulvers definiert, die als stabile Form oder intermediär während des Herstellprozesses entstehen und mit einander zu den größeren Sekundärpartikeln reagieren können. Diese Sekundärpartikel entstehen also durch Koagulation der Primärpartikel zu größeren Einheiten (=Aggregate durch chem. Bindungen und/oder Agglomerate durch z.B. van-der-Waals-Wechselwirkungen).

Unter einem Grundkörper kann im Sinne der vorliegenden Erfindung ein fertig verarbeitetes Elektrodenmaterial verstanden werden, welches die Partikel aufweisend das erste lithiierbare Aktivmaterial enthält oder daraus besteht. Der Grundkörper kann zusätzlich zu den Partikeln mindestens einen Leitzusatz und/oder mindestens einen Binder aufweisen. Weiterhin kann gegebenenfalls eine Beschichtung der Materialpartikel oder des Grundkörpers mit z.B. Al₂O₃, AlF₃, LiAlOₓ, ZrO₂, TiO₂, AlPO₄, LiPON (lithium phosphorous oxynitride) oder jeglichen anderen Verbindungen, die eine Übergangsmetallauflösung und andere Material-Elektrolyt-Wechselwirkungen herabsetzen ("single particle coating"), vorhanden sein.

Unter einem Aktivmaterial kann ferner im Sinne der vorliegenden Erfindung ein Material verstanden werden, welches insbesondere an einem Ladevorgang beziehungsweise Entladevorgang teilnimmt und somit das eigentlich aktive Material darstellen kann. In der Elektrode können dabei wie vorangehend erwähnt neben dem Aktivmaterial bzw. den Aktivmaterialien als solche grundsätzlich noch ein geeigneter Leitzusatz, welcher insbesondere eines aus der Gruppe von elementaren Kohlenstoffen wie z.B. Ruß, Graphit, Nanotubes aufweist, und ein geeigneter Binder, welcher insbesondere eines aus der Gruppe von natürlichen oder synthetischen Polymeren wie z.B. PVDF (Polyvinylidenfluorid), Alginate, Styrene Butadiene Rubber (SBR), Polyethylenglycol, Polyethylenimin aufweist, angeordnet sein.

Unter einem lithiierbaren Material kann insbesondere ein Material verstanden werden, welches reversibel Lithiumionen aufnehmen und wieder abgeben kann. Beispielsweise kann ein lithiierbares Material mit Lithiumionen interkalierbar und/oder mit Lithiumionen legierbar sein und/oder Lithiumionen unter Phasenumwandlung aufnehmen und wieder abgeben. Beispielsweise kann das lithiierbare Elektrodenaktivmaterial ein mit Lithiumionen interkalierbares Elektrodenaktivmaterial sein. Das lithiierbare Elektrodenaktivmaterial kann also als aktives Speichermaterial bezeichnet werden. Beispielsweise kann das Elektrodenaktivmaterial bei gleichzeitigem Vorhandensein eines Lithiumions (Li⁺) und eines Elektrons das Lithiumion einlagern, was auch als Interkalieren bezeichnet wird, und je nach Spannung wieder freigeben, was auch als Deinterkalieren bezeichnet wird.

Unter einem Übergangsmetalloxid kann insbesondere eine Substanzklasse verstanden werden, die die Sauerstoffverbindungen der Übergangsmetalle beinhaltet. Übergangsmetalle sind die Elemente mit den Ordnungszahlen 21 - 30, 39 - 48, 57 - 80 und 89 - 112 im Periodensystem der Elemente.

Unter einem redoxaktiven Element kann insbesondere im Sinne dieser Erfindung verstanden werden, dass das Element bei Durchlaufen eines Lade- und/oder Entladevorganges im Bereich von z.B. 2,0 V - 4,8 V eine Änderung des Oxidationszustandes, also eine Oxidation oder Reduktion, zeigt.

Unter einer Funktionsschicht kann insbesondere eine Schutzschicht verstanden werden, welche eine Wechselwirkung des Aktivmaterials mit einem Elektrolyten, bspw. bei Einsatz in einer Lithium-Zelle, verhindert und somit die Elektrode vor Verlust von Aktivmaterial schützt.

Unter einer Dotierung versteht man den Austausch eines Elementes in einer chemischen Verbindung durch ein anderes Element, nämlich einem Dotierelement. Im Rahmen dieser Erfindung ist hiermit vorzugsweise der vollständige oder anteilige Austausch eines Übergangsmetallelementes (vgl. oben) durch ein anderes Übergangsmetallelement in einem Übergangsmetalloxid gemeint.

Der Erfindung liegt die Erkenntnis zugrunde, dass der Kapazitätsabfall durch eine Auflösung der Übergangsmetalle der Elektrode im Elektrolyten entsteht, welche wiederum zu einer Abscheidung von Lithium-haltigen Übergangsmetallverbindungen auf der Anode und somit weniger zur Verfügung stehendem Lithium führen. Durch das Vorsehen der erfindungsgemäßen Funktionsschicht, welche Lithiumionen leitend ist und mindestens ein redoxaktives Element aufweist, wird ein sehr effektiver Schutz des Elektrodenmaterials vor einem Verlust bzw. einer Auflösung des Übergangsmetalls bzw. der Übergangsmetalle im Elektrolyten bereitgestellt. Hierbei kann unter einem redoxaktiven Element auch eine Verbindung eines redoxaktiven Elements verstanden werden. Das heißt, mit anderen Worten, dass die Funktionsschicht mit dem mindestens einen redoxaktiven Element als eine Art Barriere fungiert, welche aufgrund dieser redoxaktiven Elemente eine Wechselwirkung des Aktivmaterials der Partikel mit einem Elektrolyten, bspw. bei Einsatz in einer Lithium-Zelle, verhindert und somit ein Auflösen oder Auswaschen des Übergangsmetalls verhindert. Dies führt zu einer Reduzierung des Kapazitätsabfalls und somit zu einer Steigerung der Lebensdauer der Lithium-Zelle bzw. -Batterie.

Es ist vorteilhaft, wenn das erste lithiierbare Aktivmaterial auf der allgemeinen chemischen Formel Li(NiₓCo_{y}Mn_{1-x-y})O₂ basiert, wobei x im Bereich von größer oder gleich 0 bis kleiner oder gleich 1 und y im Bereich von größer oder gleich 0 bis kleiner oder gleich 1, bevorzugterweise x im Bereich von größer oder gleich 0,2 bis kleiner oder gleich 0,8 und y im Bereich von größer oder gleich 0 bis kleiner oder gleich 0,5, und am bevorzugtesten x im Bereich von größer oder gleich 0,3 bis kleiner oder gleich 0,45 und y im Bereich von größer oder gleich 0,2 bis kleiner oder gleich 0,35 liegen. Hierbei kann das Aktivmaterial auf einem Nickel-Cobalt-Manganat (NCM) basieren, bspw. LiMn_{1/3}Ni_{1/3}Co_{1/3}O₂. Das erste lithiierbare Aktivmaterial kann weiterhin eine Dotierung wie z.B. die literaturbekannten Dotierungen mit geringen Anteilen an Sn(IV) und/oder Mg(II) oder mit redoxaktiven Elementen wie W(IV), Nb(IV), Mo(IV) o.a. aufweisen.

Entsprechend der Erfindung weist eine Mehrzahl der Partikel und/oder der Grundkörper mindestens ein zweites lithiierbares Aktivmaterial auf, welches mit mindestens einem redoxaktiven Dotierelement dotiert ist. Das zweite lithiierbare Aktivmaterial basiert dabei vorzugsweise auf einem dotierten Mangan-Oxid, insbesondere auf der allgemeinen chemischen Formel Li₂Mn_{1-z}M_{z}O₃, wobei z im Bereich von größer 0 bis kleiner 1, insbesondere im Bereich von größer oder gleich 0,01 bis kleiner oder gleich 0,3 und am bevorzugsten im Bereich von größer oder gleich 0,01 bis kleiner oder gleich 0,2 liegt und M das redoxaktive Element ist.

Dieser Maßnahme liegt die Erkenntnis zugrunde, dass der eingangs erläuterte Spannungsabfall hauptsächlich durch mangelnde strukturelle Stabilität (Strukturumwandlung) des Elektrodenmaterials bzw. des Aktivmaterials der Elektrode verursacht wird. Im Einzelnen entstehen bei der Aktivierung des lithiierbaren Aktivmaterials bzw. des dotierten Übergangsmetalls des lithiierbaren Aktivmaterials in dem Elektrodenmaterial Sauerstoff-Leerstellen, welche die Wanderung der Übergangsmetalle und dadurch den Spannungsabfall, beispielsweise durch Akkumulation von Übergangsmetall auf dem Lithium begünstigen. Diese Maßnahme bietet daher den Vorteil, dass durch das Vorsehen mindestens eines zweiten lithiierbaren Aktivmaterials, welches mit mindestens einem redoxaktiven Dotierelement dotiert ist, bei der Aktivierung des zweiten lithiierbaren Aktivmaterials, d.h. beim ersten Formierungszyklus, in dem das elektrochemisch inaktive zweite lithiierbare Aktivmaterial aktiviert wird, weniger Sauerstoff irreversibel abgespalten wird als bei einem undotierten bzw. mit einem redoxinaktiven Element dotierten Material. Dies führt zu einer Stabilisierung der Struktur und damit der Spannungslage, da weniger Fehlstellen im Elektrodenmaterial entstehen, über die die Übergangsmetalle später wandern und somit die Struktur verändern bzw. destabilisieren können. Somit kann die Elektrode bzw. das Elektrodenmaterial der Elektrode nicht nur vor einer Auflösung der Übergangsmetalle und dem damit einhergehenden Kapazitätsabfall bewahrt werden, sondern auch strukturell stabilisiert werden, wodurch der Spannungsabfall verhindert (oder zumindest drastisch verringert) wird. Demzufolge kann ein elektrochemischer Energiespeicher mit erhöhter Lebensdauer bereitgestellt werden. Bspw. kann ein Lithium-Ionen-Akkumulator mit einer dotierten HE-NCM-Kathode und eine Graphit-Anode, der eine Spannungs- und Kapazitätsretention von 98,0 % nach 3000 Lade- und Entladezyklen bezogen auf die Ausgangswerte nach der Formierung aufweist, bereitgestellt werden.

Es ist ferner insbesondere vorteilhaft, wenn das zweite lithiierbare Aktivmaterial mit dem redoxaktiven Element aus der Funktionsschicht als Dotierelement dotiert ist. Wie eigene analytische und elektrochemische Untersuchungen gezeigt haben, liegt der beachtliche Vorteil dieser Maßnahme darin, dass beim Beschichten der Partikel bzw. des die Partikel aufweisenden Grundkörpers zeitgleich in einem Verfahrensschritt auch die Dotierung des zweiten lithiierbaren Aktivmaterials erfolgen kann. Das heißt, mit anderen Worten, dass mit dem Schritt des Beschichtens, also des Vorsehens der Funktionsschicht, welche das mindestens eine redoxaktive Element aufweist, letzteres als Dotierelemente zeitgleich in das Elektrodenmaterial, also das lithiierbare Aktivmaterial eingeführt werden kann. Somit werden durch nur einen Verfahrensschritt auf sehr effiziente und kostengünstige Art und weise beide zentralen Probleme des HE-NCM gelöst, nämlich der Kapazitätsabfall durch die erfindungsgemäße Funktionsschicht sowie der Spannungsabfall durch die Dotierung des Aktivmaterials mit den aus der Funktionsschicht stammenden redoxaktiven Dotierelementen.

Wie eingangs erläutert, eignen sich HE-NCM-Materialien besonders gut als Elektrodenmaterialien, da Sie besonders hohe Start-Spannungen bereitstellen können. Rein beispielhaft kann das erste lithiierbare Aktivmaterial als NCM-Material LiMn_{1/3}Ni_{1/3}Co_{1/3}O₂ ausgebildet sein, welches durch eine Dotierung mit einem redoxaktiven Element M und ein Hinzufügen von weiterem Lithium und/oder weiterem Mangan und ferner Sauerstoffionen zur Ladungskompensation Bereiche aufweisen kann, welche das zweite lithiierbare Aktivmaterial bilden und beispielsweise Li₂Mn_{1-z}M_{z}O₃ umfassen können, welche strukturell in das NCM-Material integriert sind. Dabei können insbesondere die vorgenannten dotierten Li₂Mn_{1-z}M_{z}O₃ -artigen Bereiche des zweiten lithiierbaren Aktivmaterials bewirken, dass die Aktivmaterialstruktur stabilisiert und die Entlade-Kapazität verbessert wird.

Entsprechend der Erfindung weist der Grundkörper einen in seine Dickenrichtung weisenden Gradienten des redoxaktiven Dotierelements auf. Der Gradient des redoxaktiven Dotierelements nimmt dabei bevorzugt von der Funktionsschicht, bspw. zu einem Metallträger hin, ab, da die Wechselwirkung des Aktivmaterials mit dem Elektrolyten überwiegend im Oberflächenbereich stattfindet und so die Kosten durch die redoxaktiven Dotierelemente reduziert werden, wenn das redoxaktive Dotierelement bevorzugt in diesem Bereich auftritt.

Des Weiteren ist es vorteilhaft, wenn das redoxaktive Element mindestens einen lonenradius aufweist, welcher im Bereich von größer oder gleich 50pm bis kleiner oder gleich 80pm, insbesondere im Bereich von größer oder gleich 60pm bis kleiner oder gleich 70pm, am bevorzugtesten im Bereich von größer oder gleich 65 pm bis kleiner oder gleich 69 pm liegt. Die lonenradien beziehen sich hierbei auf Werte nach Shannon (vgl. bspw. http://abulafia.mt.ic.ac.uk/shannon/ptable.php, Stand 21.03.2014). Die Aufweitung des Kristallgitters, z.B. gekennzeichnet durch Zunahme der Gitterparameter a, b und/oder c, während der Zyklisierung begünstigst die Wanderung der Übergangsmetalle. Versuchsreihen haben gezeigt, dass Elemente mit einem lonenradius im Bereich von größer oder gleich 50pm bis kleiner oder gleich 80pm, insbesondere im Bereich von größer oder gleich 60pm bis kleiner oder gleich 70pm, am bevorzugtesten im Bereich von größer oder gleich 65 pm bis kleiner oder gleich 69 pm sowohl Schutz vor einer Auflösung der Übergangsmetalle bieten, als auch die Aufweitung des Kristallgitters im Elektroden- bzw. Aktivmaterial reduzieren. Somit können der Kapazitäts- und der Spannungsabfall weiter reduziert sowie die Lebensdauer der Lithium-Zelle bzw. - Batterie erhöht werden.

Ferner ist es vorteilhaft, wenn das redoxaktive Element bei mindestens zwei aufeinanderfolgenden Oxidationsstufen, d.h. beim Durchlaufen der Redoxreaktion, eine geringe Änderung des lonenradius aufweist, insbesondere wenn das redoxaktive Element bei mindestens zwei aufeinanderfolgenden Oxidationsstufen einen lonenradius aufweist, welcher jeweils im Bereich von größer oder gleich 50pm bis kleiner oder gleich 80pm, insbesondere im Bereich von größer oder gleich 59pm bis kleiner oder gleich 70pm liegt. Da eine starke Änderung des lonenradius während der Zyklisierung die Wanderung der Übergangsmetalle weiter begünstigt, kann durch eine geringe Änderung des lonenradius des redoxaktiven Elements ein besserer Schutz vor einer Auflösung der Übergangsmetalle bereitgestellt sowie das Elektrodenmaterial weiter stabilisiert werden.

Vorteilhaft ist es außerdem, wenn das redoxaktive Element ferner ein Übergangsmetall ist. Die Übergangsmetalle weisen im Gegensatz zu den Hauptgruppenmetallen größtenteils unvollständig besetzte d-Orbitale auf. Hierdurch ergeben sich oftmals mehr Oxidationsstufen, die das Übergangsmetall einnehmen kann. Des Weiteren liefern insbesondere die Lithium-Schichtoxide der Übergangsmetalle Ni, Co und Mn elektrochemische Potentiale, die für Automotive-Anwendungen interessant sind (möglichst hohe Spannungslage und hohe Kapazität).

Des Weiteren ist es vorteilhaft, wenn das mindestens eine redoxaktive Element Niob, insbesondere Niob(IV), oder Wolfram, insbesondere Wolfram(IV), oder Molybdän, insbesondere Molybdän(IV), ist. Nb(IV), W(IV) und Mo(IV) sind insofern bevorzugt, als dass sie einen sehr ähnlichen lonenradius wie das als Strukturstabilisator bekannte Zinn(IV) haben, jedoch redoxaktiv unter geringer Änderung des lonenradius sind. Zunächst wird durch diese Maßnahme die Schutzwirkung der Funktionsschicht weiter verbessert. Zum anderen werden HE-NCM-Materialien erst während der Formierung unter irreversibler Abspaltung von Sauerstoff aktiviert. Vorzugsweise kann somit bei einem HE-NCM in dem zu Beginn elektrochemisch noch inaktiven zweiten lithiierbaren Aktivmaterial (z.B. Li₂MnO₃), anteilig das Mn(IV) durch ein elektrochemisch aktives Dotierelement wie z.B. Nb(IV), W(IV) oder Mo(IV) ersetzt werden. Dadurch sinken die notwendige Aktivierung des Materials und damit der irreversible Sauerstoffverlust des Materials. Dies führt zu einer Stabilisierung der Struktur und damit der Spannungslage, da weniger Fehlstellen im Elektrodenmaterial entstehen, über die die Übergangsmetalle (v.a. Ni und Mn) später wandern und somit die Struktur verändern bzw. destabilisieren können. Folglich kann ein mit Niob-, Wolfram- oder Molybdän- beschichtetes und -dotiertes HE-NCM bereitgestellt werden, welches die strukturstabilisierenden Vorteile mit einem Gewinn bei der Ausgangs-Spannung und -Kapazität verbindet, und welches gleichzeitig gegenüber den mit bekannten Materialien beschichteten Partikeln einen optimal Schutz vor Verlust von Übergangsmetall aus dem Aktivmaterial bereitstellt.

Demnach können die Partikel bzw. der die Partikel aufweisende Grundkörper ein Gemisch oder Komposit aufweisen, welches bspw. auf der allgemeinen chemischen Formel x(Li(Ni,Co,Mn)O₂) : 1-x (Li₂Mn_{1-z}M_{z}O₃) basiert, wobei x und z jeweils im Bereich von größer 0 bis kleiner 1 liegen und M für z.B. Nb, W oder Mo steht. Es ist aber auch die Mischung von NCM mit anderen Wolfram-, Molybdän- und Niob-Oxiden denkbar. Insbesondere bevorzugt ist für x der Bereich von größer oder gleich 0,2 bis kleiner oder gleich 0,7, und am bevorzugtesten ist der Bereich von größer oder gleich 0,3 bis kleiner oder gleich 0,55.

Die Synthese der Partikel kann bspw. wie folgt durch eine Co-Precipitation-Methode durchgeführt werden:
- Ni, Co, Mn und Nb Salz + Na₂CO₃ + NH₄OH (Chelat-bildner)
- 50°C Wasserbad 12 h
- Mischen mit LiOH
- Calcinieren und Quenching in flüssigem N₂.

Für das Coating der Primär- und/oder Sekundärpartikel wird das so erhaltene Pulver beispielsweise in Wasser oder einem anderen Dispergiermedium zusammen mit mind. einer Verbindung, die Nb und/oder W und/oder Mo enthält (z.B. Li7La3Nb2O13, Li7NbO6, Li3NbO4, LiTiNb2O9, Li6WO6, Li4WO5, Li6W2O9, Li₈₋ₓZr₁₋ₓNbₓO₆ o.Ä.), vermischt und abfiltriert. Der Filterrückstand wird für 10 h bei 105 °C getrocknet und anschließend für 5 h bei 450 °C geglüht.

Es können jedoch auch andere dem Fachmann bekannte Synthesemethoden für die Herstellung anorganischer Festkörperverbindungen verwendet werden wie z.B. direkte thermische Fest-Fest-Reaktionen, Reaktionen in Schmelzen und andere, die optional auch um anschließende Zerkleinerungsverfahren wie z.B. Kugelmahlen ergänzt werden können.

Beschrieben wird hier ein Verfahren zum Herstellen einer Elektrode für einen elektrochemischen Energiespeicher, insbesondere der ersten Alternative der vorangehend beschriebenen Elektrode, wobei das Verfahren folgende Schritte aufweist:
- Bereitstellen von Partikeln aufweisend mindestens ein erstes lithiierbares Aktivmaterial, welches auf einem Übergangsmetalloxid basiert;
- Beschichten der Partikel mit einer Funktionsschicht, welche Lithiumionen leitend ist und ein redoxaktives Element aufweist;
- Hinzufügen eines Leitzusatzes und eines Binders;
- Trockenverpressen der Bestandteile aus der Gruppe bestehend aus den Partikeln mit der Funktionsschicht, dem Leitzusatz und dem Binder, oder Dispergieren der Bestandteil aus der Gruppe bestehend aus den Partikeln mit der Funktionsschicht, dem Leitzusatz und dem Binder in einem Lösungsmittel, insbesondere in N-Methyl-2-pyrrolidon;
- Aufbringen, insbesondere Aufrakeln der so erhaltenen Dispersion auf einen Metallträger, insbesondere auf eine Aluminiumfolie; und
- gegebenenfalls Trocknen der Dispersion ("single particle coating").

Die Beschichtung der Partikel mit der erfindungsgemäßen Funktionsschicht kann mittels dem Fachmann bekannten Verfahren, wie z.B. Sputtering, Co-Precipitation etc. eines HE-NCM-Pulvers mit den Verbindungen Li₇La₃Nb₂O₁₃, Li₇NbO₆, Li₃NbO₄, LiTiNb₂O₉, Li₆WO₆, Li₄WO₅, Li₆W₂O₉, Li₈₋ₓZr₁₋ₓNbₓO₆ o.Ä., durchgeführt werden.

Unter einem Leitzusatz versteht man im Sinne dieser Erfindung die Zugabe von einem oder mehreren Material(ien), die durch Ausbildung eines kontinuierlichen leitfähigen Netzwerkes zwischen den Aktivmaterialpartikeln und dem Ableiter die elektrische Leitfähigkeit der Elektrode erhöhen. Als Leitzusatz können z.B. Ruß, Graphit und / oder Carbon Nanotubes o.Ä. verwendet werden.

Ein N-Methyl-2-pyrrolidon ist ein Lactam der N-Methylaminobuttersäure, also ein gamma-Lacton und wird als organisches Lösungsmittel bei diversen Reaktionen, u.a. bei der Slurry-Präparation für Batterie-Elektroden-Fertigung verwendet.

Gegenstand der vorliegenden Erfindung ist ferner ein Verfahren, entsprechend Anspruch 9, zum Herstellen einer Elektrode für einen elektrochemischen Energiespeicher, insbesondere der zweiten Alternative der vorangehend beschriebenen Elektrode, wobei das Verfahren folgende Schritte aufweist:
- Bereitstellen von Partikeln aufweisend mindestens ein erstes lithiierbares Aktivmaterial, welches auf einem Übergangsmetalloxid basiert;
- Hinzufügen eines Leitzusatzes und eines Binders;
- Trockenverpressen der Bestandteile aus der Gruppe bestehend aus den Partikeln, dem Leitzusatz und dem Binder, oder Dispergieren der Bestandteil aus der Gruppe bestehend aus den Partikeln, dem Leitzusatz und dem Binder in einem Lösungsmittel, insbesondere in N-Methyl-2-pyrrolidon;
- Aufbringen, insbesondere Aufrakeln der so erhaltenen Dispersion auf einen Metallträger, insbesondere auf eine Aluminiumfolie, um einen die Partikel aufweisenden Grundkörper zu bilden;
- gegebenenfalls Trocknen der Dispersion;
- Beschichten des Grundkörpers mit einer Funktionsschicht, welche Lithiumionen leitend ist und ein redoxaktives Element aufweist ("laminate coating").

Die Beschichtung des Grundkörpers bzw. der fertig laminierten Elektrode mit der erfindungsgemäßen Funktionsschicht kann mittels dem Fachmann bekannten Verfahren, wie z.B. Atomic Layer Deposition oder Sputtering, mit den Verbindungen Li₇La₃Nb₂O₁₃, Li₇NbO₆, Li₃NbO₄, LiTiNb₂O₉, Li₆WO₆, Li₄WO₅, Li₆Wo₂O₉, Li₈₋ₓZr₁₋ₓNbₓO₆ o.Ä. durchgeführt werden.

Durch die erfindungsgemäßen Verfahren kann zum einen auf sehr einfache Art und Weise eine schützende Funktionsschicht für das Aktivmaterial bereitgestellt werden, um eine Auflösung oder Auswaschung der Übergangsmetalle (v.a. Ni und Mn) und den damit einhergehenden Kapazitätsabfall zu verhindern. Zum anderen bieten die Verfahren zusätzlich den erheblichen Vorteil, dass ein Teil des redoxaktive Elements der Funktionsschicht bei der Beschichtung der Partikel bzw. des Grundkörpers als Dotierelement in das Aktivmaterial eingeführt werden kann. Hierdurch werden die redoxaktive Elemente bzw. Übergangsmetalle, wie z.B. Nb, Mo und/oder W in das Aktivmaterial dotiert wodurch eine Strukturstabilisierung resultiert. Letztere ist - wie vorangehend erläutert - darauf zurückzuführen, dass beim ersten Formierungszyklus, in dem die elektrochemisch inaktive Li₂MnO₃-Komponente aktiviert wird, weniger Sauerstoff irreversibel abgespalten wird (=weniger Sauerstoff-Fehlstellen) als beim undotierten HE-NCM Material. Demnach kann mit nur einem Verfahrensschritt beiden zentralen Problemen des HE-NCM, nämlich dem Kapazitätsabfall durch die Beschichtung der Partikel bzw. des Grundkörpers mit der erfindungsgemäßen Funktionsschicht sowie dem Spannungsabfall durch die gleichzeitige Dotierung des Aktivmaterials mit den aus der Funktionsschicht stammenden redoxaktiven Dotierelementen, Rechnung getragen werden.

So kann beispielsweise beim Fällungsprozess des Pulvers auf eine Zumischung von Nb, Mo und/oder W Verbindungen und auf ein Coating nach den bekannten Verfahren verzichtet werden, um anschließend in einem einzigen Prozessschritt zeitgleich die Materialdotierung zur Bekämpfung des Voltage Fades und die Schutzschicht zur Bekämpfung des Capacity Fades einzuführen.

Mit einem derartigen Verfahren lässt sich insbesondere eine Elektrode für einen elektrochemischen Energiespeicher herstellen. Diese kann insbesondere die Vorteile aufweisen, die mit Bezug auf die Elektrode erläutert wurden. Zusammenfassend kann ein derartiger Energiespeicher Vorteile bringen hinsichtlich der Spannungslage und der Kapazität.

### Zeichnungen

Die Erfindung wird nachstehend anhand der beigefügten Zeichnungen beispielhaft näher erläutert. Es zeigen:
- Fig. 1: eine schematische Darstellung einer Elektrode gemäß einem ersten Ausführungsbeispiel der vorliegenden Erfindung;
- Fig. 2: eine schematische Darstellung eines mit einer erfindungsgemäßen Funktionsschicht beschichteten Partikels;
- Fig. 3: eine schematische Darstellung einer Elektrode gemäß einem weiteren Ausführungsbeispiel der vorliegenden Erfindung;
- Fig. 4: ein Ablaufdiagramm eines Verfahrens zum Herstellen einer Elektrode gemäß Fig. 1; und
- Fig. 5: ein Ablaufdiagramm eines Verfahrens zum Herstellen einer Elektrode gemäß Fig. 3.

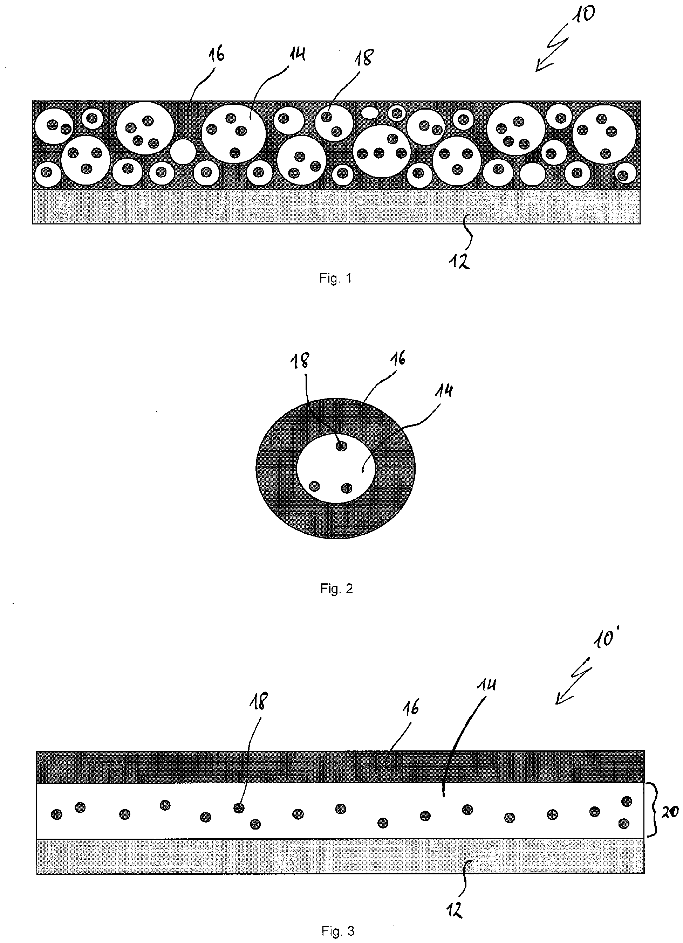

In Fig. 1 ist eine Elektrode dargestellt, welche in ihrer Gesamtheit mit der Bezugsziffer 10 versehen ist. Die Elektrode 10 weist einen Metallträger 12 auf. Der Metallträger 12 kann Aluminium aufweisen oder als eine Aluminiumfolie 12 ausgebildet sein. Der Metallträger 12 kann dabei in einer Lithium-Zelle oder Lithium-Batterie als Ableiter, insbesondere Kathodenableiter dienen.

Die Elektrode 10 weist ferner eine Mehrzahl von Partikeln 14 auf, welcher auf dem Metallträger 12 bzw. der Aluminiumfolie 12 angeordnet sind. Die Partikel 14 weisen dabei ein erstes lithiierbares Aktivmaterial auf, welches auf einem Übergangsmetalloxid basiert. Wie aus Fig. 2 ersichtlich, sind die Partikel 14 mit einer Funktionsschicht 16 versehen bzw. beschichtet. Die Partikel 14 können vollständig oder auch nur teilweise von der Funktionsschicht 16 umschlossen sein. Aus Gründen der Darstellung wurde in Fig. 1 darauf verzichtet, die Funktionsschichten 16 aller Partikel 14 einzeln einzuzeichnen. Es ist durchaus denkbar, dass eine Anzahl von Partikeln 14 an der Oberfläche der Elektrode 10 angeordnet ist und aus dieser herausragt, ohne dabei von der Funktionsschicht 16 bedeckt zu sein.

Die erfindungsgemäße Funktionsschicht 16 ist dabei Lithiumionen leitend und weist ein redoxaktives Element bzw. eine Verbindung eines redoxaktiven Elements auf. Aufgrund der redoxaktiven Elemente ist die Funktionsschicht 16 derart ausgebildet, dass sie eine Wechselwirkung des Aktivmaterials mit einem Elektrolyten, bspw. bei Einsatz bzw. im Betrieb einer Lithium-Zelle, verhindert und somit die Elektrode vor Verlust von Übergangsmetall schützt. Die Beschichtung der Partikel 14 mit der erfindungsgemäßen Funktionsschicht 16 kann mittels dem Fachmann bekannten Verfahren, wie z.B. Sputtering, Co-Precipitation etc. eines HE-NCM-Pulvers mit den Verbindungen Li₇La₃Nb₂O₁₃, Li₇NbO₆, Li₃NbO₄, LiTiNb₂O₉, Li₆WO₆, Li₄WO₅, Li₆Wo₂O₉, Li₈₋ₓZr₁₋ₓNbₓO₆ o.Ä., durchgeführt werden.

Wie in Fig. 1 ferner dargestellt, weist ein Großteil der Partikel 14 ferner ein redoxaktives Dotierelement 18 auf. Im Einzelnen weisen diese Partikel 14 ein zweites lithiierbares Aktivmaterial auf, welches mit dem redoxaktiven Dotierelement 18 dotiert ist. Es ist denkbar, dass alle Partikel 14 mit dem redoxaktiven Dotierelement 18 dotiert sind bzw. das dotierte zweite lithiierbare Aktivmaterial aufweisen. Hierbei ist es bevorzugt, wenn das redoxaktive Dotierelement 18 dem redoxaktiven Element der Funktionsschicht 16 entspricht bzw. aus der Funktionsschicht 16 stammt.

Die Elektrode 10 kann dabei neben dem Aktivmaterial bzw. den Aktivmaterialien als solche grundsätzlich einen geeigneten Leitzusatz und einen geeigneten Binder (nicht dargestellt) aufweisen. Diese Bestandteile, d.h. das Aktivmaterial, der Leitzusatz und der Binder bilden das Elektrodenmaterial der Elektrode 10.

In Fig. 3 ist eine Elektrode 10' einer weiteren erfindungsgemäßen Ausführungsform dargestellt. Die Elektrode 10' weist analog zu der Elektrode 10 aus Fig. 1 einen Metallträger 12 auf, welcher ebenfalls vorzugsweise als Aluminiumfolie 12 ausgebildet ist.

Auf dem Metallträger 12 ist ein Grundkörper 20 angeordnet, welcher die Partikel 14 aufweist oder aus den Partikel 14 besteht. Die einzelnen Partikel 14 sind hierbei unbeschichtet und weisen ebenfalls das erste lithiierbare Aktivmaterial auf, welches auf einem Übergangsmetalloxid basiert. Die Elektrode 10' bzw. der Grundkörper 20 kann dabei neben dem Aktivmaterial zusätzlich einen geeigneten Leitzusatz und einen geeigneten Binder (nicht dargestellt) aufweisen. Wie aus Fig. 3 ferner ersichtlich, ist der Grundkörper 20 mit der Funktionsschicht 16 versehen. Die Funktionsschicht 16 ist dabei analog zum ersten Ausführungsbeispiel Lithiumionen leitend und weist das mindestens eine redoxaktive Element bzw. die mindestens eine Verbindung des redoxaktiven Elements auf. Die Funktionsschicht 16 ist aufgrund ihrer Zusammensetzung derart ausgebildet, dass sie eine Wechselwirkung des Aktivmaterials mit einem Elektrolyten, bspw. bei Einsatz bzw. im Betrieb einer Lithium-Zelle, verhindert und somit die Elektrode vor Verlust von Übergangsmetall schützt. Bevorzugterweise ist die Elektrode 10' fertig laminiert, bevor die Beschichtung des Grundkörpers 20 mit der Funktionsschicht 16 erfolgt. Die Beschichtung kann mittels dem Fachmann bekannten Verfahren, wie z.B. Atomic Laxer Deposition mit den Verbindungen Li₇La₃Nb₂O₁₃, Li₇NbO₆, Li₃NbO₄, LiTiNb₂O₉, Li₆WO₆, Li₄WO₅, Li₆Wo₂O₉, Li₈₋ₓZr₁₋ₓNbₓO₆ o.Ä. durchgeführt werden.

Die Elektrode 10' bzw. der Grundkörper 20 weist ferner ein redoxaktives Dotierelement 18 auf. Im Einzelnen weist der Grundkörper 20 bzw. weisen die Partikel 14 des Grundkörpers 20 ein zweites lithiierbares Aktivmaterial auf, welches mit dem redoxaktiven Dotierelement 18 dotiert ist. Hierbei ist es bevorzugt, wenn das redoxaktive Dotierelement 18 dem redoxaktiven Element der Funktionsschicht 16 entspricht bzw. aus der Funktionsschicht 16 stammt. Ferner kann der Grundkörper 20 einen in seine Dickenrichtung weisenden Gradienten des redoxaktiven Dotierelements 18 aufweisen. Der Gradient des redoxaktiven Dotierelements 18 kann von der Funktionsschicht 20 zum Metallträger 12 hin abnehmenden.

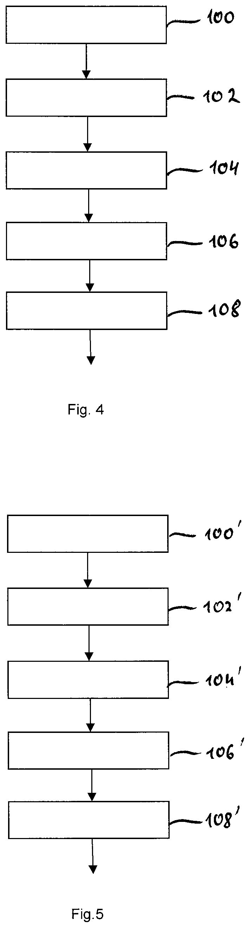

Fig. 4 zeigt ein Ablaufdiagramm eines Verfahrens zum Herstellen einer Elektrode 10, insbesondere einer Kathode für eine Lithium-Zelle, gemäß Fig. 1 ("single particle coating"). Das Verfahren weist einen Schritt des Bereitstellens 100 von Partikeln 14 aufweisend mindestens ein erstes lithiierbares Aktivmaterial, welches auf einem Übergangsmetalloxid basiert, einen Schritt des Beschichtens 102 der Partikel 14 mit einer Funktionsschicht 16, welche Lithiumionen leitend ist und ein redoxaktives Element aufweist, einen Schritt des Hinzufügens 104 eines Leitzusatzes und eines Binders, einen Schritt des Trockenverpressens 106 der Bestandteile aus der Gruppe bestehend aus den Partikeln 14 mit der Funktionsschicht 16, dem Leitzusatz und dem Binder, oder einen Schritt des Dispergierens 104 der Bestandteil aus der Gruppe bestehend aus den Partikeln 14 mit der Funktionsschicht 16, dem Leitzusatz und dem Binder in einem Lösungsmittel, insbesondere in N-Methyl-2-pyrrolidon, einen Schritt des Aufbringens 108, insbesondere des Aufrakelns 108 der so erhaltenen Dispersion auf einen Metallträger 12, insbesondere auf eine Aluminiumfolie 12; und gegebenenfalls einen Schritt des Trocknens der Dispersion, auf.

Fig. 5 zeigt ein Ablaufdiagramm eines Verfahrens zum Herstellen einer Elektrode 10', insbesondere einer Kathode für eine Lithium-Zelle, gemäß Fig. 3 ("laminate coating"). Das Verfahren weist einen Schritt des Bereitstellens 100' von Partikeln 14 aufweisend mindestens ein erstes lithiierbares Aktivmaterial, welches auf einem Übergangsmetalloxid basiert, einen Schritt des Hinzufügens 102' eines Leitzusatzes und eines Binders, einen Schritt des Trockenverpressens 104' der Bestandteile aus der Gruppe bestehend aus den Partikeln 14, dem Leitzusatz und dem Binder, oder einen Schritt des Dispergierens 104' der Bestandteil aus der Gruppe bestehend aus den Partikeln 14, dem Leitzusatz und dem Binder in einem Lösungsmittel, insbesondere in N-Methyl-2-pyrrolidon, einen Schritt des Aufbringens 106', insbesondere des Aufrakelns 106' der so erhaltenen Dispersion auf einen Metallträger 12, insbesondere auf eine Aluminiumfolie 12, um einen die Partikel 14 aufweisenden Grundkörper 20 zu bilden, gegebenenfalls einen Schritt des Trocknens der Dispersion und einen Schritt des Beschichtens 108' des Grundkörpers 20 mit einer Funktionsschicht 16, welche Lithiumionen leitend ist und ein redoxaktives Element aufweist.

Durch die erfindungsgemäßen Verfahren kann eine Funktionsschicht 16 mit zumindest einem redoxaktiven Element in bzw. an einer Elektrode bereitgestellt werden, welche einen effektiven Schutz des Elektroden- bzw. Aktivmaterials vor Verlust von Übergangsmetall bietet. Dies führt zu einer erheblichen Reduzierung des Kapazitätsverlusts. Zum anderen kann ein Teil dieses redoxaktiven Elements jedoch zusätzlich genutzt werden, um in das Aktivmaterial der Partikel 14 eingebracht zu werden und dieses zu stabilisieren. Damit lässt sich also mit nur einem Verfahrensschritt, nämlich dem Beschichten 100 der Partikel 14 bzw. dem Beschichten 108' des Grundkörpers 20 sowohl eine Schutzwirkung in Form der Funktionsschicht 16 bereitstellen, als auch eine Strukturstabilisierung durch eine Dotierung des Aktivmaterials der Partikel 14 bzw. des Grundkörpers 20 mit dem redoxaktiven Dotierelement 18 aus der Funktionsschicht 16 realisieren.

## Patentansprüche

1. Elektrode, insbesondere Kathode, für einen elektrochemischen Energiespeicher, insbesondere für eine Lithium-Zelle, mit Partikeln (14) aufweisend ein erstes lithiierbares Aktivmaterial, welches auf einem Übergangsmetalloxid basiert, wobei
- die Partikel (14) oder
- ein die Partikel (14) aufweisender Grundkörper (20) zumindest teilweise mit einer Funktionsschicht (16) versehen sind/ist, welche Lithiumionen leitend ist und mindestens ein redoxaktives Element aufweist,
und wobei
zumindest eine Mehrzahl der Partikel (14) und/oder der Grundkörper (20) ferner mindestens ein zweites lithiierbares Aktivmaterial aufweist, welches mit mindestens einem redoxaktiven Dotierelement (18), insbesondere mit dem redoxaktiven Element aus der Funktionsschicht (16), dotiert ist, **dadurch gekennzeichnet, dass**
der Grundkörper (20) einen in seine Dickenrichtung weisenden Gradienten des redoxaktiven Dotierelements (18) aufweist.

2. Elektrode (10, 10') nach Anspruch 1, **dadurch gekennzeichnet, dass** das erste lithiierbare Aktivmaterial auf der allgemeinen chemischen Formel Li(NiₓCo_{y}Mn_{1-x-y})O₂ basiert, wobei x im Bereich von größer oder gleich 0 bis kleiner oder gleich 1 und y im Bereich von größer oder gleich 0 bis kleiner oder gleich 1, bevorzugt x im Bereich von größer oder gleich 0,2 bis kleiner oder gleich 0,8 und y im Bereich von größer oder gleich 0 bis kleiner oder gleich 0,5, und weiter bevorzugt x im Bereich von größer oder gleich 0,3 bis kleiner oder gleich 0,45 und y im Bereich von größer oder gleich 0,2 bis kleiner oder gleich 0,35 liegen.

3. Elektrode (10, 10') nach Anspruch 1, **dadurch gekennzeichnet, dass** das zweite lithiierbare Aktivmaterial auf einem dotierten Mangan-Oxid basiert, insbesondere wobei das zweite lithiierbare Aktivmaterial auf der allgemeinen chemischen Formel Li₂Mn_{1-z}M_{z}O₃ basiert, wobei z im Bereich von größer 0 bis kleiner 1, bevorzugt im Bereich von größer oder gleich 0,01 bis kleiner oder gleich 0,3 und weiter bevorzugt im Bereich von größer oder gleich 0,01 bis kleiner oder gleich 0,2 liegt und M das redoxaktive Element ist.

4. Elektrode (10, 10') nach einem der vorhergehenden Ansprüche, **dadurch gekennzeichnet, dass** das redoxaktive Element mindestens einen lonenradius aufweist, welcher im Bereich von größer oder gleich 50pm bis kleiner oder gleich 80pm, bevorzugt im Bereich von größer oder gleich 60pm bis kleiner oder gleich 70pm, weiter bevorzugt im Bereich von größer oder gleich 65 pm bis kleiner oder gleich 69 pm liegt.

5. Elektrode (10, 10') nach einem der vorhergehenden Ansprüche, **dadurch gekennzeichnet, dass** das redoxaktive Element bei mindestens zwei aufeinanderfolgenden Oxidationsstufen eine geringe Änderung des lonenradius aufweist, insbesondere wobei das redoxaktive Element bei mindestens zwei aufeinanderfolgenden Oxidationsstufen einen lonenradius aufweist, welcher jeweils im Bereich von größer oder gleich 50pm bis kleiner oder gleich 80pm, insbesondere im Bereich von größer oder gleich 59pm bis kleiner oder gleich 70pm liegt.

6. Elektrode (10, 10') nach einem der vorhergehenden Ansprüche, **dadurch gekennzeichnet, dass** das redoxaktive Element ferner ein Übergangsmetall ist.

7. Elektrode (10, 10') nach einem der vorhergehenden Ansprüche, **dadurch gekennzeichnet, dass** das mindestens eine redoxaktive Element Niob, insbesondere Niob(IV), Wolfram, insbesondere Wolfram(IV), oder Molybdän, insbesondere Molybdän(IV), ist.

8. Energiespeicher, insbesondere für eine Lithium-Zelle, aufweisend eine Elektrode (10, 10') nach einem der Ansprüche 1 bis 7.

9. Verfahren zum Herstellen einer Elektrode (10') für einen elektrochemischen Energiespeicher, insbesondere einer Elektrode (10') nach einem der Ansprüche 1 bis 7, aufweisend folgende Schritte:
- Bereitstellen (100') von Partikeln (14) aufweisend mindestens ein erstes lithiierbares Aktivmaterial, welches auf einem Übergangsmetalloxid basiert;
- Hinzufügen (102') eines Leitzusatzes und eines Binders;
- Trockenverpressen (104') der Bestandteile aus der Gruppe bestehend aus den Partikeln (14), dem Leitzusatz und dem Binder, oder Dispergieren (104') der Bestandteil aus der Gruppe bestehend aus den Partikeln (14), dem Leitzusatz und dem Binder in einem Lösungsmittel, insbesondere in N-Methyl-2-pyrrolidon;
- Aufbringen (106'), insbesondere Aufrakeln (106') der so erhaltenen Dispersion auf einen Metallträger (12), insbesondere auf eine Aluminiumfolie (12), um einen die Partikel (14) aufweisenden Grundkörper (20) zu bilden;
- gegebenenfalls Trocknen der Dispersion;
- Beschichten (108') des Grundkörpers (20) mit einer Funktionsschicht (16), welche Lithiumionen leitend ist und ein redoxaktives Element aufweist;
und wobei zumindest eine Mehrzahl der Partikel (14) und/oder der Grundkörper (20) ferner mindestens ein zweites lithiierbares Aktivmaterial aufweist, welches mit mindestens einem redoxaktiven Dotierelement (18), insbesondere mit dem redoxaktiven Element aus der Funktionsschicht (16), dotiert ist, **dadurch gekennzeichnet, dass** der Grundkörper (20) einen in seine Dickenrichtung weisenden Gradienten des redoxaktiven Dotierelements (18) aufweist.

## Claims

1. Electrode, especially cathode, for an electrochemical energy storage means, especially for a lithium cell, comprising particles (14) including a first lithiatable active material based on a transition metal oxide, wherein
- the particles (14) or
- a main body (20) including the particles (14) has/have been provided at least partly with a functional layer (16) which is lithium ion-conducting and includes at least one redox-active element,
and wherein
at least a multitude of the particles (14) and/or the main body (20) also includes at least one second lithiatable active material doped with at least one redox-active doping element (18), especially with the redox-active element from the functional layer (16), **characterized in that**
the main body (20) has a gradient of the redox-active doping element (18) that points in its thickness direction.

2. Electrode (10, 10') according to Claim 1, **characterized in that** the first lithiatable active material is based on the general chemical formula Li(NiₓCo_{y}Mn_{1-x-y})O₂ where x is in the range from not less than 0 to not more than 1 and y is in the range from not less than 0 to not more than 1, preferably x is in the range from not less than 0.2 to not more than 0.8 and y is in the range from not less than 0 to not more than 0.5, and further preferably x is in the range from not less than 0.3 to not more than 0.45 and y is in the range from not less than 0.2 to not more than 0.35.

3. Electrode (10, 10') according to Claim 1, **characterized in that** the second lithiatable active material is based on a doped manganese oxide, especially wherein the second lithiatable active material is based on the general chemical formula Li₂Mn_{1-z}M_{z}O₃ where z is in the range from greater than 0 to less than 1, preferably in the range from not less than 0.01 to not more than 0.3 and further preferably in the range from not less than 0.01 to not more than 0.2, and M is the redox-active element.

4. Electrode (10, 10') according to any of the preceding claims, **characterized in that** the redox-active element has at least one ionic radius in the range from not less than 50 pm to not more than 80 pm, preferably in the range from not less than 60 pm to not more than 70 pm, further preferably in the range from not less than 65 pm to not more than 69 pm.

5. Electrode (10, 10') according to any of the preceding claims, **characterized in that** the redox-active element has a small change in ionic radius in at least two successive oxidation states, especially wherein the redox-active element has an ionic radius in each of at least two successive oxidation states which is in the range from not less than 50 pm to not more than 80 pm, especially in the range from not less than 59 pm to not more than 70 pm.

6. Electrode (10, 10') according to any of the preceding claims, **characterized in that** the redox-active element is also a transition metal.

7. Electrode (10, 10') according to any of the preceding claims, **characterized in that** the at least one redox-active element is niobium, especially niobium(IV), tungsten, especially tungsten(IV), or molybdenum, especially molybdenum(IV).

8. Energy storage means, especially for a lithium cell, including an electrode (10, 10') according to any of Claims 1 to 7.

9. Process for producing an electrode (10') for an electrochemical energy storage means, especially an electrode (10') according to any of Claims 1 to 7, having the following steps:
- providing (100') particles (14) including at least one first lithiatable active material based on a transition metal oxide;
- adding (102') a conductive additive and a binder;
- dry-pressing (104') the constituents from the group consisting of the particles (14), the conductive additive and the binder, or dispersing (104') the constituents from the group consisting of the particles (14), the conductive additive and the binder in a solvent, especially in N-methyl-2-pyrrolidone;
- applying (106'), especially knife-coating (106'), the dispersion thus obtained onto a metal carrier (12), especially to an aluminium foil (12) in order to form a main body (20) including the particles (14);
- optionally drying the dispersion;
- coating (108') the main body (20) with a functional layer (16) which is lithium ion-conducting and includes a redox-active element;
and wherein at least a multitude of the particles (14) and/or the main body (20) also includes at least one second lithiatable active material doped with at least one redox-active doping element (18), especially with the redox-active element from the functional layer (16), **characterized in that** the main body (20) has a gradient of the redox-active doping element (18) that points in its thickness direction.

## Revendications

1. Électrode, en particulier cathode, destinée à un accumulateur d'énergie électrochimique, en particulier à une pile au lithium, contenant des particules (14) comportant un premier matériau actif pouvant être lithié, qui a pour base un oxyde de métal de transition, dans laquelle
- les particules (14) ou
- un corps de base (20) comportant les particules (14) sont/est pourvues/pourvu au moins en partie d'une couche fonctionnelle (16) qui est conductrice d'ions lithium et comporte au moins un élément à activité redox, et dans laquelle
au moins une pluralité des particules (14) et/ou le corps de base (20) comporte en outre au moins un second matériau actif pouvant être lithié, qui est dopé par au moins un élément dopant à activité redox (18), en particulier par l'élément à activité redox qui provient de la couche fonctionnelle (16),
**caractérisée en ce que** le corps de base (20) présente un gradient de l'élément de dopage à activité redox (18) qui est dirigé dans la direction de son épaisseur.

2. Électrode (10, 10') selon la revendication 1, **caractérisée en ce que** le premier matériau actif pouvant être lithié a pour base la formule chimique générale Li(NiₓCo_{y}Mn_{1-x-y})O₂, dans laquelle x se situe dans la plage allant de 0 ou plus à 1 ou moins et y se situe dans la plage allant de 0 ou plus à 1 ou moins, x se situe de préférence dans la plage allant de 0,2 ou plus à 0,8 ou moins et y se situe dans la plage allant de 0 ou plus à 0,5 ou moins, et plus préférablement, x se situe dans la plage allant de 0,3 ou plus à 0,45 ou moins et y se situe dans la plage allant de 0,2 ou plus à 0,35 ou moins.

3. Électrode (10, 10') selon la revendication 1, **caractérisée en ce que** le second matériau actif pouvant être lithié a pour base un oxyde de manganèse dopé, en particulier dans laquelle le second matériau actif pouvant être lithié a pour base la formule chimique générale Li₂Mn_{1-z}M_{z}O₃, dans laquelle z se situe dans la plage allant de 0 ou plus à 1 ou moins, de préférence dans la plage allant de 0,01 ou plus à 0,3 ou plus, et plus préférablement, dans la plage allant de 0,01 ou plus à 0,2 et M est l'élément à activité redox.

4. Électrode (10, 10') selon l'une des revendications précédentes, **caractérisée en ce que** l'élément à activité redox présente au moins un rayon ionique qui se situe dans la plage allant de 50pm ou plus à 80pm ou moins, de préférence dans la plage allant de 60pm ou plus à 70pm ou moins, et plus préférablement dans la plage allant de 65pm ou plus à 69pm ou moins.

5. Électrode (10, 10') selon l'une des revendications précédentes, **caractérisée en ce que** l'élément à activité redox présente une faible variation du rayon ionique dans au moins deux états successifs d'oxydation, en particulier dans laquelle l'élément à activité redox présente, dans au moins deux états d'oxydation successifs, un rayon ionique qui se situe respectivement dans la plage allant de 50pm ou plus à 80pm ou moins, notamment dans la plage allant de 59pm ou plus à 70pm ou moins.

6. Électrode (10, 10') selon l'une des revendications précédentes, **caractérisée en ce que** l'élément à activité redox est en outre un métal de transition.

7. Électrode (10, 10') selon l'une des revendications précédentes, **caractérisée en ce que** ledit au moins un élément à activité redox est le niobium, en particulier le niobium(IV), le tungstène, en particulier le tungstène(IV), ou le molybdène, en particulier le molybdène(IV).

8. Dispositif accumulateur d'énergie, en particulier destiné à une pile au lithium, comprenant une électrode (10, 10') selon l'une des revendications 1 à 7.

9. Procédé de fabrication d'une électrode (10') destinée à un dispositif accumulateur d'énergie électrochimique, en particulier une électrode (10') selon l'une des revendications 1 à 7, comprenant les étapes consistant à :
- fournir (100') des particules (14) comportant au moins un premier matériau actif pouvant être lithié, qui a pour base un oxyde de métal de transition ;
- ajouter (102') un additif conducteur et un liant ;
- presser à sec (104') les constituants du groupe constitué par les particules (14), l'additif conducteur et le liant, ou disperser (104') le constituant du groupe constitué par les particules (14), l'additif conducteur et le liant dans un solvant, en particulier la N-méthyl-2-pyrrolidone ;
- appliquer (106'), notamment par raclage (106'), la dispersion ainsi obtenue sur un support métallique (12), notamment sur une feuille d'aluminium (12), afin de former un corps de base (20) comportant les particules (14) ;
- si nécessaire, sécher la dispersion ;
- revêtir (108') le corps de base (20) d'une couche fonctionnelle (16) qui est conductrice d'ions lithium et comporte un élément à activité redox ;
et dans laquelle au moins une pluralité des particules (14) et/ou le corps de base (20) comporte en outre au moins un second matériau actif pouvant être lithié, qui est dopé par au moins un élément dopant à activité redox (18), en particulier par l'élément à activité redox qui provient de la couche fonctionnelle (16), **caractérisée en ce que** le corps de base (20) présente un gradient de l'élément de dopage à activité redox (18) qui est dirigé dans la direction de son épaisseur.
